# EUROPÄISCHE PATENTSCHRIFT

(11) **EP 1 436 783 B1**
(45) Veröffentlichungstag und Bekanntmachung des Hinweises auf die Patenterteilung: **06.04.2005**
(21) Anmeldenummer: 02764849.2
(22) Anmeldetag: 21.08.2002
(51) Int. Cl.: G07B 15/00

(54) **ERFASSUNGSSYSTEM FÜR FAHRZEUGE MIT GPS**
DETECTION SYSTEM FOR VEHICLES EQUIPPED WITH GPS
SYSTEME DE DETECTION POUR VEHICULES EQUIPES DU GPS

(30) Priorität: 11.10.2001 DE 10149991
(43) Veröffentlichungstag der Anmeldung: 14.07.2004
(73) Patentinhaber: Vodafone Holding GmbH, 40213 Düsseldorf (DE)
(72) Erfinder: QUARTIER, Frank, 47533 Kleve (DE)
(74) Vertreter: Weisse, Jürgen, Dipl.-Phys.
(86) Internationale Anmeldenummer: PCT/EP2002/009090
(87) Internationale Veröffentlichungsnummer: WO 2003/034346

(56) Entgegenhaltungen:
- EP-A- 0 802 509
- EP-A- 1 006 340
- WO-A-95/14909
- US-A- 5 717 389
- US-A- 5 721 678

## Beschreibung

### Technisches Gebiet

Die Erfindung betrifft ein Erfassungssystem zum Erfassen von Fahrzeugen mit einem Positionsbestimmungssystem, z.B. Satellitennavigationssystem (GPS) oder Peilsystem, bei der Benutzung von Straßen; mit den Merkmalen
a) Mittel, mit denen ein Fahrzeug sein empfangenes Koordinatensignal an das Erfassungssystem übermittelt,
b) wobei das Erfassungssystem eine Rechnereinheit enthält;
c) in einem Speicher der Rechnereinheit eine digitale Straßenkarte vorliegt,
d) wobei ausgewählte Straßen der Straßenkarte in geeignete Abschnitte unterteilt sind;
e) jeder Abschnitt wiederum in digitale Rechtecksektoren unterteilt ist,
f) Mittel zum Zuordnen der Rechtecksektoren den Koordinaten des jeweils erfaßten Fahrzeugs,
g) jeder Abschnitt jeweils eine geeignete Länge der Rechtecksektoren aufweist;
h) die Rechtecksektoren über der Straßenführung liegen.

Ferner betrifft die Erfindung ein Verfahren zum Erfassen von Fahrzeugen mit einem Positionsbestimmungssystem, z.B. Satelitennavigationssystem (GPS), bei der Benutzung von Straßen, mit folgenden Verfahrensschritten:
a) Übermitteln des empfangenen Koordinatensignals an ein Erfassungssystem mit einer Rechnereinheit, in dessen Speicher eine digitale Straßenkarte vorliegt,
b) Unterteilen ausgewählter Straßen der Straßenkarte in geeignete Abschnitte;
e) Unterteilen eines jeden Abschnitts wiederum in digitale Rechtecksektoren,
f) Zuordnen der Rechtecksektoren den Koordinaten des jeweils erfaßten Fahrzeugs,
g) jedem Abschnitt jeweils eine geeignete Länge für die Rechtecksektoren zuordnen;
h) Legen der Rechtecksektoren über die Straßenführung.

### Stand der Technik

Für die Nutzung von bestimmten Straßen, wie z.B. Autobahnen, großen Brücken oder Tunneln, werden schon seit langem in einigen Ländern Gebühren erhoben. Diese Straßennutzungsgebühren, auch Maut genannt, werden üblicherweise an bestimmten Punkten, bei Autobahnen in der Regel an der Ausfahrt, an Mautstationen fällig. Die Vorgehensweise hierzu kann kurz wie folgt beschrieben werden: Ein Nutzer fährt mit seinem Fahrzeug zunächst an einer Autobahnauffahrt auf die Autobahn auf. Dabei zieht er von einer Mautstation beispielsweise eine Mautkarte, aus der hervorgeht, wo er auf die Autobahn aufgefahren ist. Beim Abfahren wird bei einer Mautstation an der Ausfahrt die zurückgelegte Strecke anhand der Mautkarte ermittelt und die entsprechende Gebühr kassiert.

In anderen Ländern wird für Transitreisende an der Grenze eine Vignette verkauft. Nur Inhaber einer solchen Vignette dürfen bestimmte Straßen, wie beispielsweise Autobahnen, nutzen.

Beide Verfahren haben Vor- bzw. Nachteile. Dieses Gebührenerhebung mit Mautstationen ist relativ personalintensiv, da die fällige Mautgebühr an den Mautstationen von menschlichen Arbeitskräften vorgenommen werden. Sie ist jedoch auf die wirklich zurückgelegte Strecke bezogen. Ein weiterer Nachteil bei der Erhebung der Straßennutzungsgebühren mit Mautstationen ist, daß bei einem hohen Verkehrsaufkommen die Mautstationen Ausgangspunkte für Verkehrsstaus sind. Die Vignettenlösung ist zwar nicht sonderlich personalintensiv, weil die Vignette in jedem Laden verkauft werden kann, trifft aber alle, auch diejenigen, die die gebührenpflichtige Straße nur relativ kurz nutzen. Diese zahlen nämlich für die kurze Benutzung einen sehr hohen Preis.

Eine weitere Lösung für die Erhebung von Mautgebühren sind Erfassungssystem über Funk, bei denen eine Abrechnung in der Regel später erfolgen kann. Aus der europäischen Patentschrift EP 0 730 728 ist ein solches Erfassungssystem bekannt. Die zu erfassenden Fahrzeuge verfügen hier über eine Einrichtung zum Empfangen von Satellitennavigationssignalen. Hiermit wird die jeweilige geographische Position des Fahrzeugs ermittelt. Die entsprechenden Koordinaten werden über Funk an eine Rechnereinrichtung übertragen. In der Rechnereinrichtung liegt nun ein digitales Abbild der Straßenkarten in Vektordarstellung vor. Einige Straßen sind davon als gebührenpflichtig ausgewählt. Diese gebührenpflichtigen Straßen werden in einzelne Sektionen unterteilt. Über jede Sektion werden mehrere geeignet lange und rechteckige Segmente gelegt, so daß die jeweilige gesamte Sektion abgedeckt ist. Diese Segmente weisen, je nach Art des Straßenverlaufes, eine unterschiedliche Länge auf, wobei die Länge der Segmente einer Sektion immer gleich lang ist. Um die Anzahl der rechteckigen Segmente nicht in die Höhe zu treiben, werden die rechteckigen Segmente breiter als die Straße selbst ausgelegt. Hierdurch werden auch kleinere Krümmungen automatisch abgedeckt, ohne die Gliederung der Sektion in noch feinere Segmente erforderlich zu machen. Dies spart Speicherplatz und letztendlich damit auch Rechnerzeit, da nicht soviele Daten verarbeitet werden müssen, wie bei einer sehr feinen Segmentgliederung. Durch Optimierung kann für jede Sektion die geeignete Segmentlänge gefunden werden, so daß auch der Speicherbedarf in der Rechnereinrichtung möglichst gering gehalten wird. Sobald die Koordinaten eines erfaßten Fahrzeugs in ein solches Segment gelangen, werden die Gebühren fällig und erfaßt. Sobald ein solches Segment verlassen wird, werden keine weiteren Gebühren erhoben.

Diese Art der Sektions- und Segmentbildung weist einen gravierenden Nachteil auf: Sobald eine nicht gebührenpflichtige Straße nahe genug an eine gebührenpflichtige Straße kommt, würde ein Fahrzeug auf der gebührenfreien Straße plötzlich in die Gebührenerfassung gelangen. Diese "kritischen Bereiche" werden derzeit daher von der Gebührenüberwachung ausgespart. Eine Sektion fängt also einmal vor und einmal nach diesem "kritischen Bereich" an.

### Offenbarung der Erfindung

Aufgabe der Erfindung ist es daher, die Nachteile des Standes der Technik zu beseitigen und ein System und ein Verfahren zu schaffen, bei dem solche "kritischen Bereiche" bei der Erfassung eines Fahrzeugs berücksichtigt werden. Dabei soll der verbrauchte Speicherplatz möglichst optimiert ausgenutzt werden.

Erfindungsgemäß wird die Aufgabe dadurch gelöst, daß bei einem Erfassungssystem zum Erfassen von Fahrzeugen mit einem Positionsbestimmungssystem der eingangs genannten Art
i) für jeden Abschnitt jeweils eine geeignete Breite der Rechtecksektoren vorgesehen ist.

Weiterhin wird die Aufgabe durch ein Verfahren zum Erfassen von Fahrzeugen mit einem Positionsbestimmungssystem der eingangs genannten Art mit folgendem Verfahrensschritt gelöst:
j) jedem Abschnitt jeweils eine geeignete Breite für die Rechtecksektoren zuzuordnen.

Bisher wurden die Straßen, die für eine Fahrzeugerfassung relevant waren, als digitale Straßenkarten in einem oder mehreren Rechnern gespeichert. Diese digitalen Straßenkarten werden, insbesondere von kommerziellen Anbietem von geographischen Kartenmaterial, angeboten. Um nicht jeden einzelnen Punkt der Straßenführung in den Rechner - aus Gründen des Speicherplatzes und der Rechenzeit -aufnehmen zu müssen, werden die in Betracht zu ziehenden Straßen in Abschnitte unterteilt. Über diese Abschnitte werden wiederum in geeigneter Weise Rechtecksektoren oder rechteckige Segmente gelegt. Die Rechtecksektoren weisen jeweils für jeden Abschnitt immer die gleich Größe auf. Sie wurden bislang jedoch immer nur gleich breit angelegt.

Die Erfindung beruht auf dem Prinzip, auch die Breite dieser Rechtecksektoren für jeden Abschnitt geeignet zu variieren. Hierdurch können diese Rechtecksektoren auch an kritischen Bereiche angepaßt werden. Unter dem Ausdruck "kritische Bereiche" sollen im folgenden solche Bereiche der digitalen Straßenkarte verstanden werden, wo wenigstens zwei Bereiche so dicht nebeneinander liegen, daß der Bereich, in dem ein Fahrzeug nicht erfaßt werden soll, in den zu erfassenden Bereich hineinfällt. Zwei dicht nebeneinander verlaufende Straßen können einen solchen kritischen Bereich bilden, wie z.B. eine zu einer Autobahn unmittelbar parallel verlaufende Landstraße, wobei die Autobahn ein zu erfassender Bereich ist und die Landstraße nicht. Nur die Fahrzeuge auf der Autobahn sollen erfaßt werden. Durch die Anpassung der Rechtecksektoren in der Breite kann dieser Umstand berücksichtigt werden, ohne daß vielmehr Speicher und die damit verbundene Rechenzeit verbraucht wird. Trotzdem wird das Fahrzeug über den gesamten Straßenverlauf erfaßt. Während beim Stand der Technik diese kritischen Bereiche für die Erfassung ausgespart werden mußten.

Als vorteilhafte Ausgestaltung der Erfindung hat sich erwiesen, wenn die Abschnitte eine unterschiedliche Länge aufweisen. Auf diese Weise wird das System sehr flexibel und variabel. Die Abschnitte können auf eine Länge gebracht werden, die eine möglichst optimale Ausnutzung des Rechenspeichers und der damit verbundenen Rechenzeit gewährleistet. Vorteilhafterweise werden die Abschnitte im Falle einer Autobahn - beispielsweise von Ausfahrt zu Ausfahrt - ausgewählt.

In einer bevorzugten Ausführung des erfindungsgemäßen Erfassungssystems handelt es sich bei den ausgewählten Straßen um gebührenpflichtige Straßen, wie z.B. Autobahnen. Das Erfassungssystem kann auf diese Art zur Überwachung von gebührenpflichtigen Straßen herangezogen werden. Jedes Fahrzeug, daß die überwachten Straßen nutzt, wird durch das erfindungsgemäße System erfaßt und muß entsprechende Gebühren entrichten.

Bei Eintritt in das Erfassungssystem muß dieses aktiviert werden. Hierfür sind in einer geeigneten Ausführung Mittel vorgesehen, die die Erfassung des Fahrzeugs erst bei Eintritt des Koordinatensignals in einen Rechtecksektor aktiviert. Analog muß das Erfassungssystem auch wieder deaktiviert werden. Dies erfolgt vorteilhafterweise durch geeignete Mittel, welche die Erfassung des Fahrzeugs bei Austritt des Koordinatensignals aus einem Rechtecksektor deaktiviert.

Damit eine eindeutige Zuordnung von Fahrzeug und erfaßten Koordinaten erfolgen kann, sind in einer bevorzugten Ausführung Identifizierungsmittel vorgesehen, welche ein individuelles Identifizierungssignal zum eindeutigen Identifizieren eines erfaßten Fahrzeugs an das Erfassungssystem senden. Hierdurch wird eindeutig festgelegt, zu wem die erfaßten Koordinaten gehören und wem gegebenenfalls die Straßennutzungsgebühren berechnet werden müssen. In einer Ausführung der Erfindung sind daher Mittel für eine Gebührenzuordnung für die erfaßten Fahrzeuge vorgesehen.

Weiterhin sind bei einer bevorzugten Ausführung der Erfindung Mittel zum Ermitteln des Eintrittswinkels und/oder Austrittswinkels eines Fahrzeugs in einen Rechtecksektor vorgesehen. Anhand des Ein- bzw. Austrittswinkels erhält man ein zusätzliches Kriterium, um festzustellen, ob ein Fahrzeug sich in einem zu erfassenden Bereich befindet oder nicht. In einem Kreuzungsbereich bewegt sich beispielsweise das Fahrzeug üblicherweise nicht parallel zu einer Straße, wenn es diese nur kreuzt. Dieses Fahrzeug verfügt somit über einen bestimmten Eintritts- bzw. Austrittswinkel gegenüber dem zu erfassenden Bereich. Wenn das Fahrzeug in einem vorher festgelegten Winkelintervall in den zu erfassenden Bereich gelangt, wird dieses von dem Erfassungssystem nur als kreuzendes Fahrzeug berücksichtigt.

Weiterhin sind in einer bevorzugten Ausführung Mittel zum Optimieren bzw. Reduzieren der Datenmengen, insbesondere der Straßendaten, der Abschnittsdaten und der Daten der Rechtecksektoren. Diese Mittel können beispielsweise geeignete Kompressionsalgorithmen enthalten, wodurch die Daten relativ kompakt gehalten werden können.

In einer weiteren vorteilhaften Ausgestaltung der Erfindung liegen die digitalen Straßenkarten als Vektordaten vor. Hiermit ist eine einfache Verarbeitung der Kartendaten im Rechner gewährleistet. Für die digitalen Karten kann ein beliebiger Maßstab angenommen werden, ohne daß sich die Grundinformation der Vektordaten, somit der digitalen Karte, ändert.

Es sind weiterhin Mittel zum Festlegen eines Toleranzbereiches vorgesehen, in dem die Aktivierung bzw. Deaktivierung der Erfassung des Fahrzeugs erfolgt. Hiermit soll verhindert werden, daß Fahrzeuge, die noch nicht erfaßt werden dürfen, die aber ggf. trotzdem in den Rand des zu erfassenden Bereiches gelangen, nicht bei der Erfassung berücksichtigt werden. Hier hat es sich als vorteilhaft erwiesen, wenn ein gewisser Toleranzbereich für die Aktivierung bzw. Deaktivierung festgelegt wird.

Als vorteilhafte Ausgestaltung des erfindungsgemäßen Verfahrens hat sich erwiesen, wenn den Abschnitten eine geeignete Länge zugeordnet wird, wobei die Längen unterschiedlich sein können. Ein weiterer Aspekt des Verfahren's ergibt sich, wenn gebührenpflichtige Straßen als relevante Straßen ausgewählt werden.

In einer geeigneten Ausgestaltung des Verfahrens wird die Unterteilung der Straßen in Abschnitte, im Fall von Autobahnen oder autobahnähnlichen Straßen, von Ausfahrt zu Ausfahrt, vorgenommen. Dies erleichtert die Handhabung des erfindungsgemäßen Verfahrens.

Vorteilhafterweise wird bei dem Verfahren die Erfassung des Fahrzeugs erst bei Eintritt des Koordinatensignals in einen Rechtecksektor aktiviert bzw. bei Austritt des Koordinatensignals aus einem Rechtecksektor deaktiviert. Damit kann verhindert werden, daß das zu erfassende Fahrzeug ununterbrochen beobachtet wird. Zur eindeutigen Zuordnung der Koordinaten zu einem Fahrzeug wird in einer weiteren vorteilhaften Ausgestaltung ein Identifizierungssignal zum eindeutigen Identifizieren eines erfaßten Fahrzeugs an das Erfassungssystem gesendet. Sobald die erfaßten Koordinaten einem Fahrzeug zugeordnet sind, lassen sich diesem auch entsprechende Gebühren zuordnen.

Vorteilhafterweise wird analog zu dem erfindungsgemäßen Erfassungssystem auch bei dem erfindungsgemäßen Verfahren der Eintrittswinkel und/oder Austrittswinkel, mit denen ein Fahrzeugs in ein Rechtecksektor ein- bzw. austritt, ermittelt.

In einer bevorzugten Ausgestaltung des Verfahrens erfolgt eine Datenoptimierung bzw. Datenreduzierung, insbesondere der Straßendaten, der Abschnittsdaten und der Daten der Rechtecksektoren. Die Optimierung kann durch geeignete Anordnung und die Reduzierung der Daten durch Datenkompression mit Kompressionsalgorithmen vorgenommen werden

Analog zur Ausgestaltung des erfindungsgemäßen Erfassungssystems werden bei dem erfindungsgemäßen Verfahren ebenfalls die Daten der digitalen Straßenkarte, vorteilhafterweise als Vektordaten, im Speicher der Rechnereinheit abgespeichert. Bei Vektordatensätzen können bei einer Vergrößerung oder einer Verkleinerung, beispielsweise eines Kartenausschnitts, keine Informationen verloren gehen.

Vorteilhafterweise wird auch bei einer Ausgestaltung des erfindungsgemäßen Verfahrens ein Toleranzbereich festgelegt, in dem die Aktivierung bzw. Deaktivierung der Erfassung eines Fahrzeugs erfolgt. Durch diese Maßnahme werden nur die Fahrzeuge erfaßt, die sich wirklich innerhalb des zu erfassenden Bereiches befinden.

Weitere Vorteile ergeben sich aus dem Gegenstand der Unteransprüche.

### Kurze Beschreibung der Zeichnung

- Fig. 1: zeigt in einer Prinzipskizze einen Ausschnitt einer digitalen Straßenkarte in Vektordarstellung, mit einer gebührenpflichtigen Autobahn und gebührenfreier Raststätte.
- Fig. 2: zeigt in einer Prinzipskizze einen Ausschnitt einer digitalen Straßenkarte in Vektordarstellung, mit einer gebührenpflichtigen Autobahn und gebührenfreier Landstraße.
- Fig.3: zeigt die Funktionsweise eines erfindungsgemäßen Erfassungssystems.

### Bevorzugtes Ausführungsbeispiel

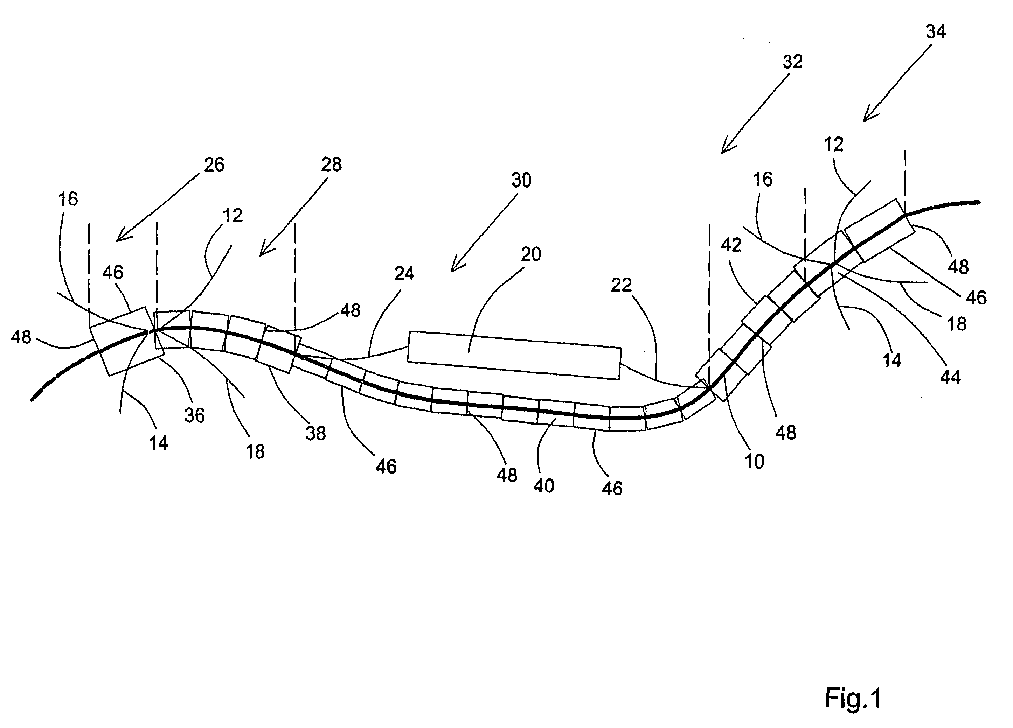

Fig. 1 zeigt in einer Prinzipskizze einen Ausschnitt einer Straßenkarte in Vektordarstellung, wie sie beispielsweise auch in dem Speicher einer Rechnereinheit eines erfindungsgemäßen Erfassungssystems vorliegt. Prinzipiell wird von Vektordarstellung dann gesprochen, wenn die Straßenkarte aus lauter Koordinaten besteht, die zur Darstellung lediglich mit Linien verbunden werden. Die Koordinaten der Karte werden in Tabellen gespeichert. Durch geeignete Koordinatentransformation können so Ausschnitte in beliebieger Größe dargestellt werden, ohne bei der Vergrößerung oder Verkleinerung Information zu verlieren, wie es beispielsweise bei einer Pixelgrafik der Fall wäre.

Ein erfindungsgemäßes Erfassungssystem dient insbesondere dazu diejenigen Kraftfahrzeuge zu erfassen, die gebührenpflichtige Straßen nutzen. Andere Anwendungsmöglichkeiten bestehen beispielsweise in der polizeilichen Observierung von bestimmten Fahrzeugen. Gleichzeitig kann ein solches Erfassungssystem als Diebstahlschutz dienen, da die Position und die Identifikation des Fahrzeugs kontinuierlich gesendet werden. Ferner kann ein solches Erfassungssystem grundsätzlich auch z.B. zur Verkehrskontrolle und/oder -regulierung dienen. Durch die Auswertung der erfaßten Daten können einstellbare Geschwindigkeitsschilder geregelt werden, um bei einer hohen Verkehrsdichte Staus zu verhindern.

Fahrzeuge des vorliegenden Ausführungsbeispiels von Fig. 1 sind mit einem Satellitennavigationssystem (GPS= "Global Positioning System") ausgerüstet. Über das Satellitennavigationssystem werden die Koordinaten der augenblicklichen Position des Fahrzeugs ermittelt. Solche Fahrzeuge sind in der Lage, beispielsweise über Funk, kontinuierlich die Koordinaten ihrer Position an das Erfassungssystem zu senden. Neben den Koordinatensignalen müssen die Fahrzeuge jedoch auch Identifikationssignale senden, mit denen das Fahrzeug eindeutig durch das Erfassungssystem identifiziert werden kann. Das Erfassungssystem weist eine geeignete Empfangs- und Verarbeitungseinrichtung auf, um die Koordinaten- und Identifikationssignale zu empfangen und zu verarbeiten. Die Verarbeitungseinrichtung besteht aus einem oder mehreren Rechnern, die ggf. untereinander vernetzt sind. In den Speichern der Rechner liegt das digitale Kartenmaterial vor, daß u.a. von kommerziellen Anbietern angeboten wird. In Fig. 1 wird somit quasi ein digitales Abbild eines Kartenausschnitts dargestellt.

Mit 10 wird in Fig. 1 eine gebührenpflichtige Autobahn bezeichnet, die als geschlängelte Linie dargestellt ist. Auf die Autobahn 10 führen Auffahrten 12 und 14 hin. Von der Autobahn 10 führen weiterhin Ausfahrten 16, 18 weg. An der Autobahn 10 liegt ferner eine Raststätte 20, zu der Ausfahrt 22 von der Autobahn 10 führt. Von der Raststätte 20 gelangt ein Kraftfahrzeug zurück zur Autobahn 10 über Auffahrt 24. Während es sich bei der Autobahn 10 um einen gebührenpflichtigen Bereich handelt, ist die Raststätte ein gebührenfreier Raum. Die Autobahn 10 ist in geeignete Abschnitte 26, 28, 30, 32 und 34 unterteilt. Die Abschnitte 26, 28, 30, 32, 34 der Autobahn 10 werden durch senkrecht gestrichelte Linien angedeutet. In diese Abschnitte 26, 28, 30, 32, 34, oder auch Sektionen genannt, werden Rechtecksektoren 36, 38, 40, 42 und 44 über den Verlauf der Autobahn 10 gelegt.

Die Rechtecksektoren 36, 38, 40, 42, 44 eines jeden Abschnitts 26, 28, 30, 32, 34 sind in ihrer Länge 46 und Breite 48 unterschiedlich ausgelegt, und zwar so, daß sie in geeigneter Weise in den Abschnitt 26, 28, 30, 32, 34 passen. Sie werden dazu in ihrer Länge 46 und Breite 48 jeweils für jeden Abschnitt 26, 28, 30, 32, 34 so dimensioniert, daß möglichst wenig Rechtecksektoren 36, 38, 40, 42, 44 verwendet werden, damit möglichst wenig Speicherplatz des Rechner verbraucht wird. Die Rechtecksektoren 36, 38, 40, 42, 44 eines jeden Abschnitts 26, 28, 30, 32, 34 sind jedoch immer jeweils gleich groß.

Da bei zu breiten Rechtecksektoren 40 leicht Bereiche abgedeckt werden, die nicht mehr zu den gebührenpflichtigen Abschnitten 30 gehören - im vorliegenden Ausführungsbeispiel beispielsweise die Raststätte 20 - müssen dort die Rechtecksektoren 40 relativ schmal ausgelegt werden (also kleine Breite 48), damit die Rechtecksektoren 40 nicht auch diesen Bereich überlappen. Die Rechtecksektoren 26,28,32,34 anderer Abschnitte 26,28,32,34 können hingegen erheblich breiter dimensioniert sein.

Sobald die an das Erfassungssystem übermittelten Koordinaten eines Fahrzeugs in einen solchen Rechtecksektor 36, 38, 40, 42, 44 gelangen, werden für dieses Fahrzeug Straßennutzungsgebühren fällig. Die Gebührenerfassung wird damit aktiviert. Erst beim Verlassen eines Rechtecksektors 36, 38, 40, 42, 44 wird die Gebührenerfassung deaktiviert. Anhand des Identifikationssignals, welches vom Fahrzeug übermittelt wird, kann dem Fahrzeug nun eindeutig die Gebühr für die gefahrene Strecke auf der gebührenpflichtigen Autobahn 10 berechnet werden.

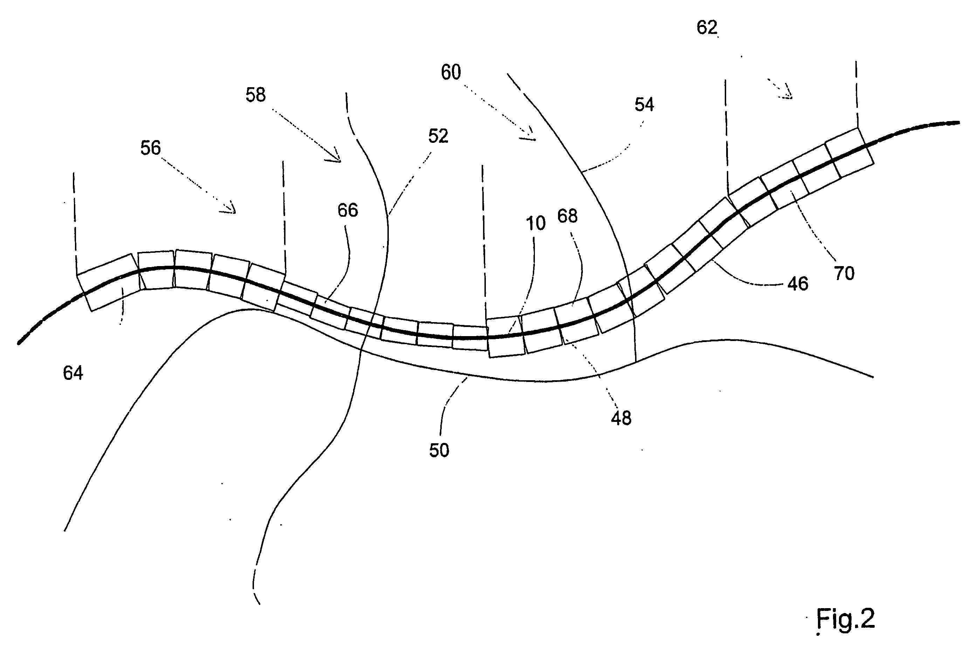

In Fig. 2 ist ein ähnlicher Sachverhalt dargestellt wie in Fig. 1. Bei der dicken geschlängelten Linie handelt es sich wiederum um die gebührenpflichtige Autobahn 10. Anstelle der Raststätte 20 sind nun mehrere Landstraßen 50, 52, 54 als nicht gebührenpflichtige Bereiche dargestellt. Die Landstraße 50 liegt zumindest in Teilbereichen sehr dicht an der Autobahn 10. Die Landstraßen 52, 54 kreuzen die Autobahn 10. Die kostenpflichtige Autobahn 10 ist in Abschnitte 56, 58, 60, 62 unterteilt. Jeder dieser Abschnitte 56, 58, 60, 62 weist, analog zu Fig. 1, individuelle Rechtecksektoren 64, 66, 68, 70 mit geeigneten Längen 46 und Breiten 48 auf. In dem Bereich des Abschnitts 58 sind die Rechtecksektoren 66 sehr schmal ausgelegt, um nicht die Landstraße 50 zu überlappen. Die Landstraße 50 verläuft nämlich sehr dicht neben der Autobahn 10. Ansonsten würden für ein Fahrzeug, welches über die Landstraße 50 fährt, unter Umständen Gebühren erhoben, obwohl dies gar nicht notwendig wäre. Die Gebührenerfassung erfolgt genauso, wie es oben zu Fig. 1 beschrieben ist.

Da Fahrzeuge, welche über die Landstraßen 52 bzw. 54 fahren, die gebührenpflichtige Autobahn 10 zwangsläufig kreuzen, müßten auch für diese Gebühren erhoben werden, da sie in den gebührenpflichtigen Bereich der Autobahn 10 gelangen und diesen, wenn auch nur kurzfristig, aktivieren. Um diese ungerechtfertigte Gebührenerfassung zu vermeiden, werden solche Fahrzeuge, die in einem nahezu senkrechten Winkel in den gebührenpflichtigen Bereich gelangen, von der Erfassung ausgenommen. Gegebenenfalls kann als Kriterium auch die Aufenthaltszeit im gebührenpflichtigen Bereich hinzugezogen werden. Wenn ein Fahrzeug sich nur einen kurzen Augenblick in dem gebührenrelevanten Bereich befindet, so wird es von der Gebührenerfassung ausgeschlossen.

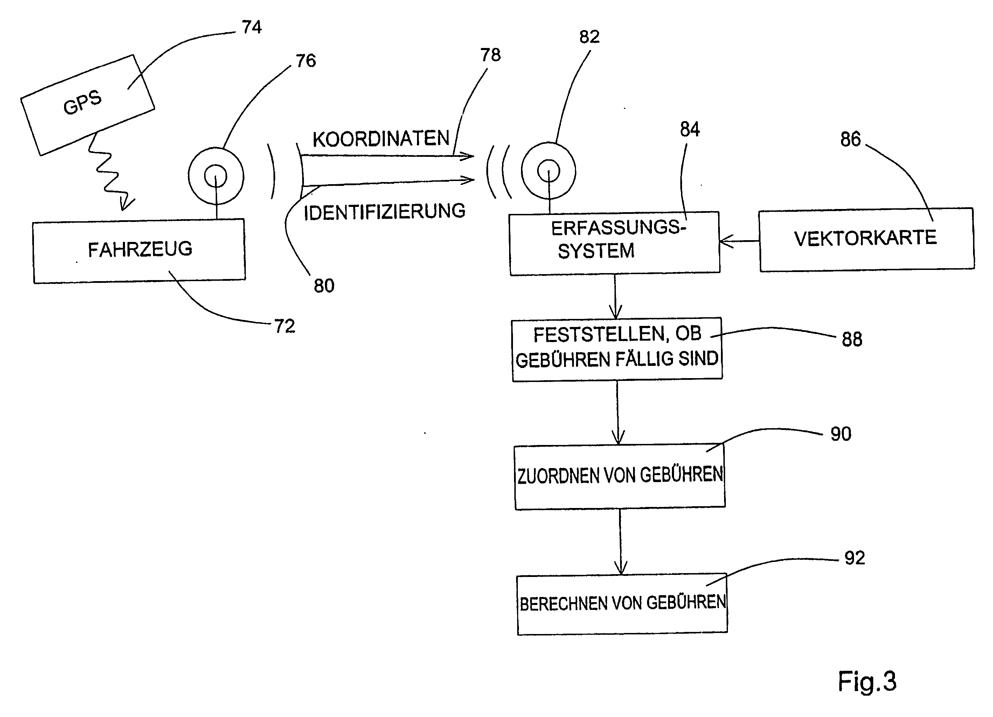

Anhand von Fig. 3 soll kurz die prinzipielle Funktionsweise des erfindungsgemäßen Erfassungssystems bzw. des Verfahrens zum Erfassen von Fahrzeugen erläutert werden, wie es bereits weiter oben angedeutet. Ein Fahrzeug 72 erhält von einem Satellitennavigationssystem 74 Daten bezüglich seiner genauen Position. Über Funk 76 sendet das Fahrzeug 72 die Positionskoordinaten, Pfeil 78, und ein individuelles Identifizierungssignal, Pfeil 80. Diese Positionskoordinaten 78 und das Identifizierungssignal 80 werden von einer Empfangseinrichtung 82 eines Erfassungssystems 84 empfangen. In dem Erfassungssystem wird anhand einer geographischen Karte 86 in Vektordarstellung festgestellt (wie zu Fig. 1 und 2 beschrieben), ob für die augenblickliche Position des Fahrzeugs 72 Gebühren fällig sind, Kasten 88. Wenn Gebühren fällig sind, werden dem Konto des Fahrzeugs, welches durch das Identifizierungssignal 80 identifiziert wurde, Straßennutzungsgebühren zugeordenet, Kasten 90. Anschließend kann automatisch dem Halter des Fahrzeugs eine Rechnung zugestellt werden, Kasten 92.

## Patentansprüche

1. Erfassungssystem (84) zum Erfassen von Fahrzeugen (72) mit einem Positionsbestimmungssystem (74), z.B. Satellitennavigations- oder Peilsystem, bei der Benutzung von Straßen (10); mit den Merkmalen
a) Mittel (76), mit denen ein Fahrzeug sein empfangenes Koordinatensignal (78) an das Erfassungssystem (84) übermittelt,
b) wobei das Erfassungssystem (84) eine Rechnereinheit enthält;
c) in einem Speicher der Rechnereinheit eine digitale Straßenkarte (86) vorliegt,
d) wobei ausgewählte Straßen (10) der Straßenkarte (86) in geeignete Abschnitte (26, 28, 30,32,34) unterteilt sind;
e) jeder Abschnitt (26, 28, 30,32,34) wiederum in digitale Rechtecksektoren (36, 38, 40, 42, 44) unterteilt ist,
f) Mittel zum Zuordnen der Rechtecksektoren (36, 38, 40, 42, 44) den Koordinaten des jeweils erfaßten Fahrzeugs (72),
g) jeder Abschnitt (26, 28, 30,32,34) jeweils eine geeignete Länge (46) der Rechtecksektoren (36, 38,40,42, 44) aufweist;
h) die Rechtecksektoren (36, 38, 40, 42, 44) über der Straßenführung liegen,
**dadurch gekennzeichnet, daß**
i) für jeden Abschnitt (26, 28, 30,32,34) jeweils eine geeignete Breite (48) der Rechtecksektoren (36, 38, 40, 42, 44) vorgesehen ist.

2. Erfassungssystem (84) zum Erfassen von Fahrzeugen (72) mit einem Positionsbestimmungssystem (74) bei der Benutzung von Straßen (10) nach Anspruch 1, **dadurch gekennzeichnet, daß** die Abschnitte (26, 28, 30, 32, 34) eine unterschiedliche Länge (46) aufweisen.

3. Erfassungssystem (84) zum Erfassen von Fahrzeugen (72) mit einem Positionsbestimmungssystem (74) bei der Benutzung von Straßen (10) nach einem der Ansprüche 1 oder 2, **dadurch gekennzeichnet, daß** die ausgewählten Straßen gebührenpflichtige Straßen, wie z.B. Autobahnen (10), sind.

4. Erfassungssystem (84) zum Erfassen von Fahrzeugen (72) mit einem Positionsbestimmungssystem (74) bei der Benutzung von Straßen (10) nach Anspruch 3, **dadurch gekennzeichnet, daß** die Abschnitte (26, 28, 30, 32, 34) von Ausfahrt (16, 18 ) zu Ausfahrt (16, 18) vorgesehen sind.

5. Erfassungssystem (84) zum Erfassen von Fahrzeugen (72) mit einem Positionsbestimmungssystem (74) bei der Benutzung von Straßen (10) nach einem der Ansprüche 1 bis 4, **dadurch gekennzeichnet, daß** Mittel vorgesehen sind, die die Erfassung des Fahrzeugs (72) erst bei Eintritt des Koordinatensignals (78) in einen Rechtecksektor (36, 38, 40, 42, 44) aktiviert.

6. Erfassungssystem (84) zum Erfassen von Fahrzeugen (72) mit einem Positionsbestimmungssystem (74) bei der Benutzung von Straßen (10) nach einem der Ansprüche 1 bis 5, **dadurch gekennzeichnet, daß** Mittel vorgesehen sind, die die Erfassung des Fahrzeugs (72) bei Austritt des Koordinatensignals (78) aus einem Rechtecksektor (36, 38, 40, 42, 44) deaktiviert.

7. Erfassungssystem (84) zum Erfassen von Fahrzeugen (72) mit einem Positionsbestimmungssystem (74) bei der Benutzung von Straßen (10) nach einem der Ansprüche 1 bis 6, **gekennzeichnet durch** Identifizierungsmittel, welche ein Identifizierungssignal (80) zum eindeutigen Identifizieren eines erfaßten Fahrzeugs (72) an das Erfassungssystem (84) senden.

8. Erfassungssystem (84) zum Erfassen von Fahrzeugen (72) mit einem Positionsbestimmungssystem (74) bei der Benutzung von Straßen (10) nach einem der Ansprüche 1 bis 7, **dadurch gekennzeichnet, daß** Mittel für eine Gebührenzuordnung (90) für die erfaßten Fahrzeuge (72) vorgesehen sind.

9. Erfassungssystem (84) zum Erfassen von Fahrzeugen (72) mit einem Positionsbestimmungssystem (74) bei der Benutzung von Straßen (10) nach einem der Ansprüche 1 bis 8, **dadurch gekennzeichnet, daß** Mittel zum Ermitteln des Eintrittswinkels und/oder Austrittswinkels eines Fahrzeugs (72) in einen Rechtecksektor (36, 38, 40, 42, 44) vorgesehen sind.

10. Erfassungssystem (84) zum Erfassen von Fahrzeugen (72) mit einem Positionsbestimmungssystem (74) bei der Benutzung von Straßen (10) nach einem der Ansprüche 1 bis 9, **gekennzeichnet durch** Mittel zum Optimieren bzw. Reduzieren der Datenmengen, insbesondere der Straßendaten, der Abschnittsdaten (26, 28, 30, 32, 34) und der Daten der Rechtecksektoren (36, 38, 40, 42, 44).

11. Erfassungssystem (84) zum Erfassen von Fahrzeugen (72) mit einem Positionsbestimmungssystem (74) bei der Benutzung von Straßen (10) nach einem der Ansprüche 1 bis 10, **dadurch gekennzeichnet, daß** die digitale Straßenkarte (86) als Vektordaten vorliegt.

12. Erfassungssystem (84) zum Erfassen von Fahrzeugen (72) mit einem Positionsbestimmungssystem (74) bei der Benutzung von Straßen (10) nach einem der Ansprüche 1 bis 11, **dadurch gekennzeichnet, daß** Mittel zum Festlegen eines Toleranzbereiches vorgesehen sind, in dem die Aktivierung bzw. Deaktivierung der Erfassung des Fahrzeugs (72) erfolgt.

13. Verfahren zum Erfassen von Fahrzeugen mit einem Positionsbestimmungssystem (74), z.B. Satelitennavigationssystem (GPS), bei der Benutzung von Straßen (10), mit folgenden Verfahrensschritten:
a) Übermitteln des empfangenen Koordinatensignals (78) an ein Erfassungssystem (84) mit einer Rechnereinheit, in dessen Speicher eine digitale Straßenkarte (86) vorliegt,
b) Unterteilen ausgewählter Straßen (10) der Straßenkarte (86) in geeignete Abschnitte (26, 28, 30, 32, 34);
e) Unterteilen eines jeden Abschnitts (26, 28, 30, 32, 34) wiederum in digitale Rechtecksektoren (36, 38, 40, 42, 44),
f) Zuordnen der Rechtecksektoren (36, 38, 40, 42, 44) den Koordinaten (78) des jeweils erfaßten Fahrzeugs (72),
g) jedem Abschnitt (26, 28, 30, 32, 34) jeweils eine geeignete Länge (46) für die Rechtecksektoren (36, 38, 40, 42, 44) zuordnen;
h) Legen der Rechtecksektoren (36, 38, 40, 42, 44) über die Straßenführung (10),
**dadurch gekennzeichnet, daß**
i) jedem Abschnitt (26, 28, 30, 32, 34) jeweils eine geeignete Breite (48) für die Rechtecksektoren (36, 38, 40, 42, 44) zugeordnet wird.

14. Verfahren zum Erfassen von Fahrzeugen (72) mit einem Positionsbestimmungssystem (74) bei der Benutzung von Straßen (10) nach Anspruch 13, **dadurch gekennzeichnet, daß** den Abschnitten (26, 28, 30, 32, 34) eine geeignete Länge zugeordnet wird, wobei die Längen unterschiedlich sein können.

15. Verfahren zum Erfassen von Fahrzeugen (72) mit einem Positionsbestimmungssystem (74) bei der Benutzung von Straßen (10) nach einem der Ansprüche 13 oder 14, **dadurch gekennzeichnet, daß** gebührenpflichtige Straßen (10) als relevante Straßen ausgewählt werden.

16. Verfahren zum Erfassen von Fahrzeugen (72) mit einem Positionsbestimmungssystem (74) bei der Benutzung von Straßen (10) nach Anspruch 15, **dadurch gekennzeichnet, daß** die Unterteilung der Straßen in Abschnitte (26, 28, 30, 32, 34) im Fall von Autobahnen oder autobahnähnlichen Straßen von Ausfahrt (16, 18) zu Ausfahrt (16, 18) vorgenommen wird.

17. Verfahren zum Erfassen von Fahrzeugen (72) mit einem Positionsbestimmungssystem (74) bei der Benutzung von Straßen (10) nach einem der Ansprüche 13 bis 16, **dadurch gekennzeichnet, daß** die Erfassung des Fahrzeugs (72) erst bei Eintritt des Koordinatensignals (78) in einen Rechtecksektor (36, 38, 40, 42, 44) aktiviert wird.

18. Verfahren zum Erfassen von Fahrzeugen (72) mit einem Positionsbestimmungssystem (74) bei der Benutzung von Straßen (10) nach einem der Ansprüche 13 bis 17, **dadurch gekennzeichnet, daß** die Erfassung des Fahrzeugs (72) bei Austritt des Koordinatensignals (78) aus einem Rechtecksektor. (36, 38, 40, 42, 44) deaktiviert wird.

19. Verfahren zum Erfassen von Fahrzeugen (72) mit einem Positionsbestimmungssystem (74) bei der Benutzung von Straßen (10) nach einem der Ansprüche 13 bis 18, **dadurch gekennzeichnet, daß** ein Identifizierungssignal (80) zum eindeutigen Identifizieren eines erfaßten Fahrzeugs (72) an das Erfassungssystem (84) gesendet wird.

20. Verfahren zum Erfassen von Fahrzeugen (72) mit einem Positionsbestimmungssystem (74) bei der Benutzung von Straßen (10) nach einem der Ansprüche 13 bis 19, **dadurch gekennzeichnet, daß** Gebühren einem erfaßten Fahrzeug (72) zugeordnet werden.

21. Verfahren zum Erfassen von Fahrzeugen (72) mit einem Positionsbestimmungssystem (74) bei der Benutzung von Straßen (10) nach einem der Ansprüche 13 bis 20, **dadurch gekennzeichnet, daß** der Eintrittswinkel und/oder Austrittswinkel, mit denen ein Fahrzeug (72) in einen Rechtecksektor (36, 38, 40, 42, 44) ein- bzw. austritt, ermittelt wird.

22. Verfahren zum Erfassen von Fahrzeugen (72) mit einem Positionsbestimmungssystem (74) bei der Benutzung von Straßen (10) nach einem der Ansprüche 13 bis 21, **dadurch gekennzeichnet, daß** eine Datenoptimierung bzw. Datenreduzierung, insbesondere der Straßendaten, der Abschnittsdaten und der Daten der Rechtecksektoren (36, 38, 40, 42, 44), erfolgt.

23. Verfahren zum Erfassen von Fahrzeugen (72) mit einem Positionsbestimmungssystem (74) bei der Benutzung von Straßen (10) nach einem der Ansprüche 13 bis 22, **dadurch gekennzeichnet, daß** die digitale Straßenkarte (86) als Vektordaten im Speicher der Rechnereinheit abgespeichert wird.

24. Verfahren zum Erfassen von Fahrzeugen (72) mit einem Positionsbestimmungssystem (74) bei der Benutzung von Straßen (10) nach einem der Ansprüche 13 bis 23, **dadurch gekennzeichnet, daß** ein Toleranzbereich festgelegt wird, in dem die Aktivierung bzw. Deaktivierung der Erfassung eines Fahrzeugs erfolgt.

## Claims

1. Detection system (4) for detecting vehicles (72) by means of a positioning system (74), for example satellite navigation system or bearing-taking systems, when these vehicles use roads (10), comprising the features of
a) means (76), by which a vehicle transmits its received coordinate signal (78) to the detection system (84),
b) the detection system (84) comprising a computer unit;
c) a digital road map (86) is provided in a memory of the computer unit;
d) selected roads (10) of the road map (86) are subdivided into appropriate sections (26,28,30,32,34);
e) each section (26,28,30,32,34), in turn, being subdivided into digital rectangular sectors (36,38,40,42,44):
f) means for associating the rectangular sectors (36,38,40,42,44) with the coordinates of the respective detected vehicle (72),
g) each section (26,28,30,32,34) has a respective appropriate length (46) of the rectangular secttors (36,38,40,42,44);
h) the rectangular sectors (36,38,40,42,44) are superimposed to the course of the road,
**characterised in that**
i) an appropriate width (48) of the rectangular sectors (36,38,40,42,44) is provided for each section (26,28,30,32,34).

2. Detection system (84) for detecting vehicles (72) by means of a positioning system (74), when these vehicles use roads (10) according to claim 1, **characterised in that** the sections (26,28,30,32,34) have different lengths (46).

3. Detection system (84) for detecting vehicles (72) by means of a positioning system (74), when these vehicles use roads (10) according to any one of the claims 1 or 2, **characterized in that** the selected roads are toll roads as, for example, motorways.

4. Detection system (84) for detecting vehicles (72) by means of a positioning system (74), when these vehicles use roads (10), as claimed in claim 3, **characterised in that** the sections (26,28,30,32,34) extend from exit (16,18) to exit (16,18).

5. Detection system (84) for detecting vehicles (72) by means of a positioning system (74), when these vehicles use roads (10) according to any one of the claims 1 to 4, **characterised in that** means are provided which activate the detection of the vehicle (72) not before thr coordinate signal (78) enters a rectangular sector (36,38,40,42,44).

6. Detection system (84) for detecting vehicles (72) by means of a positioning system (74), when these vehicles use roads (10) according to any one of the claims 1 to 5, **characterised in that** means are provided which de-activate the detection of the vehicle (72), when the coordinate signal (78) leaves a rectangular sector (36,38,40,42,44).

7. Detection system (84) for detecting vehicles (72) by means of a positioning system (74), when these vehicles use roads (10) according to any one of the claims 1 to 6, **characterised by** identifying means, which emit, to the detection system (84), an identification signal (80) for unambiguously identifying a detected vehicle (72).

8. Detection system (84) for detecting vehicles (72) by means of a positioning system (74), when these vehicles use roads (10) according to any one of the claims 1 to 7, **characterised in that** means are provided for allocating toll (90) to the detected vehicle (72).

9. Detection system (84) for detecting vehicles (72) by means of a positioning system (74), when these vehicles use roads (10) according to any one of the claims 1 to 8, **characterised in that** means are provided for determining the entrance angle and/or exit angle of a vehicle (72) with respect to a rectangular sector (36,38,40,42,44).

10. Detection system (84) for detecting vehicles (72) by means of a positioning system (74), when these vehicles use roads (10) according to any one of the claims 1 to 9, **characterised by** means for optimising or reducing the data quantities, in particular of the road data, of the section data (26,28,30,32,34) and of the data of the rectangular secxtors (36,38,40,42,44).

11. Detection system (84) for detecting vehicles (72) by means of a positioning system (74), when these vehicles use roads (10), as claimed in any one of the claims 1 to 10, **characterised in that** the digital road map (86) is provided as vector data.

12. Detection system (84) for detecting vehicles (72) by means of a positioning system (74), when these vehicles use roads (10), according to any one of the claims 1 to 11, **characterised in that** means are provided for fixing a tolerance range in which activation and de-activation of the detection of the vehicle (72) takes place.

13. Method of detecting vehicles by means of a positioning system (74), e.g. satellitenavigation system (GPS), when these vehicles use roads (10), comprising the steps of
a) transmitting the received coordinate signal (78) to a detection system having a computer unit in the memory of which a digital road map (86) is provided,
b) subdividing selected roads (10) of the road map (86) into appropriate sections (26,28,30,32,34),
e) subdividing, in turn, each of the sections (26,28,30,32,34) into digital rectangular sectors (36,38,40,42,44),
f) associating each of the rectangular sections (36,38,40,42,44) with the coordinates (78) of the respective detected vehicle (72),
g) allocating to each section (26,28,30,32,34) a respective appropriate length (46) for the rectangular sectors (36,38,40,42,44)
h) superimposing the rectangular sectors (36,38,40,42,44) to the course of the road (10),
**chacacterised in that**
i) a respective appropriate width (48) for the rectangular sectors (36,38,40,42,44) is allocated to each section (26,28,30,32,34).

14. Method of detecting vehicles by means of a positioning system (74), when these vehicles use roads (10), according to claim 13, **characterised in that** appropriate lengths are allocated to the sections (26,28,30,32,34), the lengths being permitted to be different.

15. Method of detecting vehicles by means of a positioning system (74), when these vehicles use roads (10), as claimed in any one of the claims 13 or 14, **characterised in that** toll roads (10) are selected as relevant roads.

16. Method of detecting vehicles by means of a positioning system (74), when these vehicles use roads (10), according to claim 15, **characterised in that**, in the case of motorways or motorway-like roads, subdivision of the roads into sections (26,28,30,32,34) is effected from exit (16,18) to exit (16,18).

17. Method of detecting vehicles by means of a positioning system (74), when these vehicles use roads (10), according to any one of the claims 13 to 17, **characterised in that** detection of the vehicle (72) is activated notbefore the coordinate signal (78) enters a rectangular sector (36,38,40,42,44).

18. Method of detecting vehicles by means of a positioning system (74), when these vehicles use roads (10), according to any one of the claims 13 to 17, **characterised in that** detection of the vehicle (72) is de-activated, when the coordinate signal (78) leaves a rectangular sector (36,38,40,42,44)

19. Method of detecting vehicles by means of a positioning system (74), when these vehicles use roads (10), according to any one of the claims 13 to 18, **characterised in that** an identifying signal (80) for the unambiguous identification of a detected vehicle (72) is transmitted to the detection system (84).

20. Method of detecting vehicles by means of a positioning system (74), when these vehicles use roads (10), according to any one of the claims 13 to 19, **characterised in that** toll fees are allocated to a detected vehicle (72).

21. Method of detecting vehicles by means of a positioning system (74), when these vehicles use roads (10), according to any one of the claims 13 to 20, **characterised in that** the entrance angle and/or exit angle, at which a vehicle (72) enters or leaves a rectangular sector (36,38,40,42,44) is determined.

22. Method of detecting vehicles by means of a positioning system (74), when these vehicles use roads (10), according to any one of the claims 13 to 21, **characterised in that** data optimisation or data reduction, respectively, in particular of road data, of section data and of the data of the rectangular sectors (36,38,40,42,44) is effected.

23. Method of detecting vehicles by means of a positioning system (74), when these vehicles use roads (10), according to any one of the claims 13 to 22, **characterised in that** the digital road map (86) is stored in the memory of the computer unit as vector data.

24. Method of detecting vehicles by means of a positioning system (74), when these vehicles use roads (10), according to any one of the claims 13 to 23, **characterised in that** a tolerance range is fixed, in which activation and de-activation of the detection of a vehicle is effected.

## Revendications

1. système de détection (84) destiné à détecter des véhicules (72) à l'aide d'un système de détermination de position (74), p. ex. un système de navigation par satellite (GPS) ou un système radiogoniométrique, empruntant des routes (10) ; présentant les caractéristiques suivantes :
(a) des moyens (76) permettant à un véhicule de transmettre son signal de coordonnées (78) reçu au système de détection (84),
(b) le système de détection (84) comprenant une unité de calcul ;
(c) une carte routière numérique (86) étant contenue dans la mémoire de l'unité de calcul,
(d) des routes (10) sélectionnées dans la carte routière (86) étant divisées en tronçons adéquats (26,28,30,32,34),
(e) chaque tronçon (26,28,30,32,34) étant lui-même divisé en secteurs rectangulaires numériques (36,38,40,42,44),
(f) des moyens destinés à associer les secteurs rectangulaires (36,38,40,42,44) aux coordonnées du véhicule (72) à chaque fois détecté,
(g) chaque tronçon (26,28,30,32,34) présentant à chaque fois une longueur (46) de secteur rectangulaire (36,38,40,42,44) adéquate ;
(h) les secteurs rectangulaires (36,38,40,42,44) étant superposés au tracé de la route,
**caractérisé en ce que**
(i) une largeur (48) de secteur rectangulaire (36,38,40,42,44) adéquate est prévue pour chaque tronçon (26, 28, 30, 32, 34 ) .

2. Système de détection (84) destiné à détecter des véhicules (72) à l'aide d'un système de détermination de position (74) empruntant des routes (10) selon la revendication 1, **caractérisé en ce que** les tronçons (26,28,30,32,34) présentent une longueur différente (46).

3. Système de détection (84) destiné à détecter des véhicules (72) à l'aide d'un système de détermination de position (74) empruntant des routes (10) selon l'une quelconque des revendications 1 ou 2, **caractérisé en ce que** les routes sélectionnées sont des routes payantes, comme p. ex. les autoroutes (10).

4. Système de détection (84) destiné à détecter des véhicules (72) à l'aide d'un système de détermination de position (74) empruntant des routes (10) selon la revendication 3, **caractérisé en ce que** les tronçons (26,28,30,32,34) sont prévus de sortie (16,18) à sortie (16,18).

5. Système de détection (84) destiné à détecter des véhicules (72) à l'aide d'un système de détermination de position (74) empruntant des routes (10) selon l'une quelconque des revendications 1 à 4, **caractérisé en ce qu'**il est prévu des moyens activant la détection du véhicule (72) seulement lorsque le signal de coordonnées (78) entre dans un secteur rectangulaire (36,38,40,42,44).

6. Système de détection (84) destiné à détecter des véhicules (72) à l'aide d'un système de détermination de position (74) empruntant des routes (10) selon l'une quelconque des revendications 1 à 5, **caractérisé en ce qu'**il est prévu des moyens désactivant la détection du véhicule (72) seulement lorsque le signal de coordonnées (78) sort d'un secteur rectangulaire (36,38,40,42,44).

7. Système de détection (84) destiné à détecter des véhicules (72) à l'aide d'un système de détermination de position (74) empruntant des routes (10) selon l'une quelconque des revendications 1 à 6, **caractérisé par** des moyens d'identification qui envoient un signal d'identification (80) au système de détection (84) afin d'identifier clairement et nettement un véhicule détecté (72).

8. Système de détection (84) destiné à détecter des véhicules (72) à l'aide d'un système de détermination de position (74) empruntant des routes (10) selon l'une quelconque des revendications 1 à 7, **caractérisé en ce que** des moyens d'association des taxes (90) pour les véhicules détectés (72) sont prévus.

9. Système de détection (84) destiné à détecter des véhicules (72) à l'aide d'un système de détermination de position (74) empruntant des routes (10) selon l'une quelconque des revendications 1 à 8, **caractérisé en ce que** des moyens de calcul de l'angle d'entrée et/ou de l'angle de sortie d'un véhicule (72) dans un secteur rectangulaire (36,38,40,42,44) sont prévus.

10. Système de détection (84) destiné à détecter des véhicules (72) à l'aide d'un système de détermination de position (74) empruntant des routes (10) selon l'une quelconque des revendications 1 à 9, **caractérisé par** des moyens d'optimisation et de réduction respectivement des quantités de données, notamment des données sur les routes, des données sur les tronçons (26,28,30,32,34) et des données des secteurs rectangulaires (36,38,40,42,44).

11. Système de détection (84) destiné à détecter des véhicules (72) à l'aide d'un système de détermination de position (74) empruntant des routes (10) selon l'une quelconque des revendications 1 à 10, **caractérisé en ce que** la carte routière numérique (86) est disponible sous forme de données vectorielles.

12. Système de détection (84) destiné à détecter des véhicules (72) à l'aide d'un système de détermination de position (74) empruntant des routes (10) selon l'une quelconque des revendications 1 à 11, **caractérisé en ce qu'**il est prévu des moyens de définition d'une plage de tolérance à l'intérieur de laquelle s'effectuent l'activation et la désactivation de la détection du véhicule (72).

13. Procédé de détection de véhicules à l'aide d'un système de détermination de position (74), p. ex. un système de navigation par satellite (GPS), empruntant des routes (10), présentant les étapes de procédé suivantes :
(a) Transmission du signal de coordonnées (78) reçu à un système de détection (84) présentant une unité de calcul dont la mémoire contient une carte routière numérique (86),
(b) Division des routes (10) sélectionnées dans la carte routière (86) en tronçons adéquats (26,28,30,32,34) ;
(e) Division de chaque tronçon (26,28,30,32,34) lui-même en secteurs rectangulaires numériques (36,38,40,42,44),
(f) Association des secteurs rectangulaires (36,38,40,42,44) aux coordonnées (78) du véhicule (72) à chaque fois détecté,
(g) Association d'une longueur (46) de secteur rectangulaire (36,38,40,42,44) adéquate à chaque tronçon (26,28,30,32,34) ;
(h) Superposition des secteurs rectangulaires (36,38,40,42,44) au tracé de la route (10),
**caractérisé en ce que**
(i) une largeur (48) de secteur rectangulaire (36,38,40,42,44) adéquate est associée à chaque tronçon (26,28,30,32,34).

14. Procédé de détection de véhicules (72) à l'aide d'un système de détermination de position (74), empruntant des routes (10), selon la revendication 13, **caractérisé en ce qu'**une longueur adéquate est associée aux tronçons (26,28,30,32,34), les longueurs pouvant être différentes.

15. Procédé de détection de véhicules (72) à l'aide d'un système de détermination de position (74), empruntant des routes (10), selon l'une quelconque des revendications 13 ou 14, **caractérisé en ce que** des routes payantes (10) sont sélectionnées comme étant des routes importantes.

16. Procédé de détection de véhicules (72) à l'aide d'un système de détermination de position (74), empruntant des routes (10), selon la revendication 15, **caractérisé en ce que** la division des routes en tronçons (26,28,30,32,34) s'effectue, dans le cas d'autoroutes ou de routes semblables à des routes, de sortie (16,18) à sortie (16,18).

17. Procédé de détection de véhicules (72) à l'aide d'un système de détermination de position (74), empruntant des routes (10), selon l'une quelconque des revendications 13 à 16, **caractérisé en ce que** la détection du véhicule (72) est seulement activée lorsque le signal de coordonnées (78) entre dans un secteur rectangulaire (36,38,40,42,44).

18. Procédé de détection de véhicules (72) à l'aide d'un système de détermination de position (74), empruntant des routes (10), selon l'une quelconque des revendications 13 à 17, **caractérisé en ce que** la détection du véhicule (72) est seulement désactivée lorsque le signal de coordonnées (78) sort d'un secteur rectangulaire (36,38,40,42,44).

19. Procédé de détection de véhicules (72) à l'aide d'un système de détermination de position (74), empruntant des routes (10), selon l'une quelconque des revendications 13 à 18, **caractérisé en ce qu'**un signal d'identification (80) destiné à identifier de façon claire et nette un véhicule détecté (72) est envoyé au système de détection (84).

20. Procédé de détection de véhicules (72) à l'aide d'un système de détermination de position (74), empruntant des routes (10), selon l'une quelconque des revendications 13 à 19, **caractérisé en ce que** des taxes sont associées à un véhicule détecté (72).

21. Procédé de détection de véhicules (72) à l'aide d'un système de détermination de position (74), empruntant des routes (10), selon l'une quelconque des revendications 13 à 20, **caractérisé en ce que** l'angle d'entrée et/ou de sortie avec lequel un véhicule (72) entre et sort respectivement dans un secteur rectangulaire (36,38,40,42,44) est calculé.

22. Procédé de détection de véhicules (72) à l'aide d'un système de détermination de position (74), empruntant des routes (10), selon l'une quelconque des revendications 13 à 21, **caractérisé en ce qu'**une optimisation des données et une réduction des donnés respectivement, notamment des données sur les routes, des données sur les tronçons et des données des secteurs rectangulaires (36,38,40,42,44) est effectuée.

23. Procédé de détection de véhicules (72) à l'aide d'un système de détermination de position (74), empruntant des routes (10), selon l'une quelconque des revendications 13 à 22, **caractérisé en ce que** la carte routière numérique (86) est mémorisée dans la mémoire de l'unité de calcul sous forme de données vectorielles.

24. Procédé de détection de véhicules (72) à l'aide d'un système de détermination de position (74), empruntant des routes (10), selon l'une quelconque des revendications 13 à 23, **caractérisé en ce qu'**une plage de tolérance à l'intérieur de laquelle s'effectuent l'activation et la désactivation respectivement de la détection d'un véhicule est définie.
